# EUROPEAN PATENT SPECIFICATION

(11) **EP 3 091 122 B1**
(45) Date of publication and mention of the grant of the patent: **13.12.2017**
(21) Application number: 16168664.7
(22) Date of filing: 06.05.2016
(51) Int. Cl.: D06F 93/00, G06Q 10/06, G06Q 10/08

(54) **METHOD AND PLANT FOR TREATING TEXTILE ARTICLES**
VERFAHREN UND ANLAGE ZUR BEHANDLUNG VON TEXTILWAREN
PROCÉDÉ ET INSTALLATION POUR LE TRAITEMENT DE PRODUITS TEXTILES

(30) Priority: 08.05.2015 IT UD20150063
(43) Date of publication of application: 09.11.2016
(73) Proprietor: Ghini, Damiano, 33057 Palmanova (UD) (IT)
(72) Inventor: Ghini, Damiano, 33057 Palmanova (UD) (IT)
(74) Representative: Petraz, Davide Luigi

(56) References cited:
- WO-A1-03/031291
- WO-A1-2006/071828
- FR-A- 627 057
- GB-A- 2 079 708
- US-A- 5 301 809
- US-A- 5 799 800
- US-A1- 2008 115 541

## Description

### FIELD OF THE INVENTION

The present invention concerns a method for treating textile articles and the corresponding treatment plant that implements the treatment method.

In particular, the present invention can be applied, but not exclusively, in industrial laundries in which textile articles are treated. The treatment can include at least one of washing, drying, ironing, folding and packaging of textile articles.

The textile articles to which the present invention can be applied can include, merely by way of non-restrictive example, tablecloths, napkins, sheets, pillowcases, towels, tea-towels, aprons or similar and comparable articles used for example in the field of hotels, restaurants, healthcare and made of different textile materials, such as for example cotton, mixed linen, damask linen, satin, non-woven fabrics or suchlike.

### BACKGROUND OF THE INVENTION

It is known that, in various sectors, whether they are public and/or private, such as hotels, restaurants, or businesses operating in the social and healthcare field, for example hospitals or care homes, a considerable quantity of textile articles are used.

These sectors produce large volumes of textile articles to be washed, with a periodic frequency, and the washing is usually given over to specialized Companies such as industrial laundries.

Initially, industrial laundries used to wash textile articles belonging to the final user, but this practice has been almost completely abandoned with the introduction of renting, where the textile articles are the exclusive property of the industrial laundry. In this case the laundry supplies the clients, i.e. the commercial and/or public businesses, with its own textile articles. The service supplied includes not only renting, but also picking up the soiled textile article from the client, washing and subsequent delivery of the cleaned textile article.

In this way, clients no longer have to worry about managing the textile articles, that is, purchasing, maintaining and disposing of the articles.

From the laundry's point of view, it can wash textile articles intended for rent by a particular client in homogeneous batches, ensuring a better performance and optimization of the plant.

In general, the treatment cycle of an industrial laundry includes the following operating steps:
- picking up from the clients the soiled textile articles, collected in appropriate containers, for example bags. The pick-up is the responsibility of the operators of the industrial laundry and the quantity of soiled textile articles is not known, because it depends on the quantity used by the client;
- delivering to the laundry the textile articles picked up;
- separating and/or counting the textile articles according to the type of textile article;
- washing the textile articles in homogeneous batches according to the type of textile article and the provenance/destination itinerary. The provenance/destination of the textile article and its composition condition the washing cycles, that is, the type of washing program to be applied. In fact, the type of business sending the textile article, either restaurants or hotels, requires that different washing parameters must be set;
- ironing and folding the textile articles after a partial or complete drying, to send them to packaging;
- packaging in packs of a standard number of textile articles with for example a heat-retractable plastic film. The packs are then put in suitable metal containers for transport;
- delivering the cleaned textile articles to the client for re-use.

Inside an industrial laundry there are two different operating streams:
- the stream of textile articles through the various operating stations, starting from pick-up from the client to return to the client;
- the stream of data that represents the stream of information needed to define a program of which days and from which clients the textile articles have to be picked up, how many soiled textile articles have been picked up, how many cleaned articles are to be delivered, how many clients to be visited to deliver the cleaned textile articles.

It is also known that the laundry's invoicing is based on a debit to the client of a price applicable to every cleaned textile article delivered. The price includes all the operations described above and the rent of the textile article.

Therefore, when the cleaned textile articles are delivered, the load travels accompanied by a delivery note which summarizes the number of pieces of the cleaned textile articles. The sum of the number of pieces of the textile articles delivered in the month, multiplied by the price per article, represents the amount of the invoice that the laundry will issue to the client.

Over the years, different treatment methods have been developed in industrial laundries.

A first treatment method, also defined "batch method", is applicable both in laundries that treat textile articles belonging to the client, and also in laundries that offer a rental service of the textile articles.

The pick-up is carried out as described above.

In the separation step, the types of textile article are separated and always keep the identification of the client they come from, i.e. batch by batch. The identification of the client they come from is maintained for the whole production cycle, in particular in the treatment, ironing and packaging steps. In this case it is not necessary to count the textile articles.

During packaging, the textile articles are counted, manually or automatically, and the delivery note is generated, which will accompany the articles to the client.

In this case the stream of data follows the stream of textile articles in the same direction.

Merely by way of example, if N types of textile articles are picked up from M clients, N x M treatment processes will be carried out.

The "batch" method is not very flexible for different types of rented textile articles supplied by a large number of clients. In fact, it is a method used by industrial laundries that have few clients who send few types of articles but in large quantities.

Another method is known, the so-called "store" method, used in particular by laundries that rent out the textile articles to the final clients and which, during the treatment process, are mixed in batches, losing every reference to their provenance.

In particular, the selection comprises counting the soiled textile articles by operators, hence a manual or semi-automatic operation. After selection, a preliminary note is issued containing information relating to the type and number of articles counted.

From this point on, the textile articles are grouped together in homogeneous batches according to type (for example napkins, tablecloths, sheets, etc.), eliminating every indication of the client they come from.

The subsequent treatment, ironing and packaging operations are carried out in homogeneous batches of textile articles.

Downstream of the treatment process the articles are stored in a store, divided according to type.

The preliminary notes issued after the soiled articles picked up have been counted in practice identify the number of textile articles that will have to be returned to the individual client. Therefore, for delivery, substantially the same number of articles are picked up from the store as were previously picked up from the client and at the end of this a delivery note is issued.

In this case too, the stream of data follows the same path as the stream of textile articles.

By way of example, if N types of textile articles from M clients are picked up, N washing processes will be performed.

One disadvantage that distinguishes the "store" method is that it needs more space to provide a store between the packaging step and the dispatch of textile articles. This implies more costs for storage, management, loading and unloading the store and a large quantity of textile articles to obtain economies of scale.

Furthermore, more human resources have to be used for the operating activities, consequently increasing the costs that the laundry has to bear.

This treatment method also implies that it is only possible to process articles that belong to the laundry and are supplied rented to clients.

Moreover, this method does not allow to plan the washing process taking into consideration the priorities of returning the textile articles to the clients.

Treatment processes are also known, described for example in document WO-A-2006/071828, carried out on articles of clothing or any surface of the spaces in which the articles of clothing are disposed. The treatment process however intends to evaluate and monitor the presence of microbes on articles of clothing and the sanitization processes to eliminate said microbes.

A process is also known, from document US-A-2008/0115541, for washing, drying and dividing garments arriving from various clients.

One purpose of the present invention is to perfect a method for treating textile articles that eliminates the need to use stores for the textile articles both upstream and downstream of a treatment plant in a laundry.

Another purpose of the present invention is to obtain a method that allows to plan treatment processes and based on the priorities of delivery.

Another purpose is to obtain a production method for industrial treatment plants applicable both in the case of rented textile articles and also those belonging to the client.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes a method for treating textile articles comprises:
- a reception step for receiving textile articles from a plurality of clients;
- a step of processing a temporal program of delivery orders of said textile articles to the clients with identification of a priority treatment order of the textile articles of the clients;
- a step of separating the textile articles of the clients into types as a function of the programmed priority treatment order, said separation providing to insert the textile articles, divided by type, into respective collection elements, common for several clients, a first count for each type of the textile articles arriving from each of the clients and possibly the issuing of a summary document, or preliminary note, containing the number of textile articles received from each client according to each type;
- a washing step, a drying step and an ironing step of the textile articles contained in the common collection elements, with treatment parameters determined as a function of the type of textile articles present in the collection elements;
- a second count for each type of the textile articles, to divide them into groups of articles to be sent to each of the clients, the number of articles of each group of articles being determined as a function of the number of articles counted during said first count;
- a packaging step for each group of articles into packages bearing an indication of the destination of the client;
- a composition step for making up a delivery order for each client during which the packages are allocated to the specific delivery order as a function of said destination indication.

According to another aspect of the present invention a control and command unit is provided to coordinate the reception step, the processing step of a temporal program of delivery orders, the separation step, the washing, drying and ironing steps, the second count, the packaging step, and the composition step, as a function of the temporal program of delivery orders.

This solution allows to organize the flow of work inside a treatment plant of an industrial laundry for example according to the "just in time" logic, that is, it allows to process the textile articles as soon as they are requested by the client, and on the basis of a temporal planning prefixed in time.

The present invention therefore supplies a method for treating textile articles that does not require big storage space either for the textile articles after they have been picked up from the clients or the textile articles already treated.

With the present method the composition of the delivery orders of the textile articles occurs directly downstream of the ironing and therefore avoids the presence of temporary storage space of all the articles divided by type and a subsequent removal by the operators of the articles to make up the delivery orders for the specific client, as was provided in the "batch" treatment method.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic representation of a treatment plant for textile articles;
- fig. 2 is an example schematic illustration of a flow diagram of a treatment method for textile articles according to a possible embodiment.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

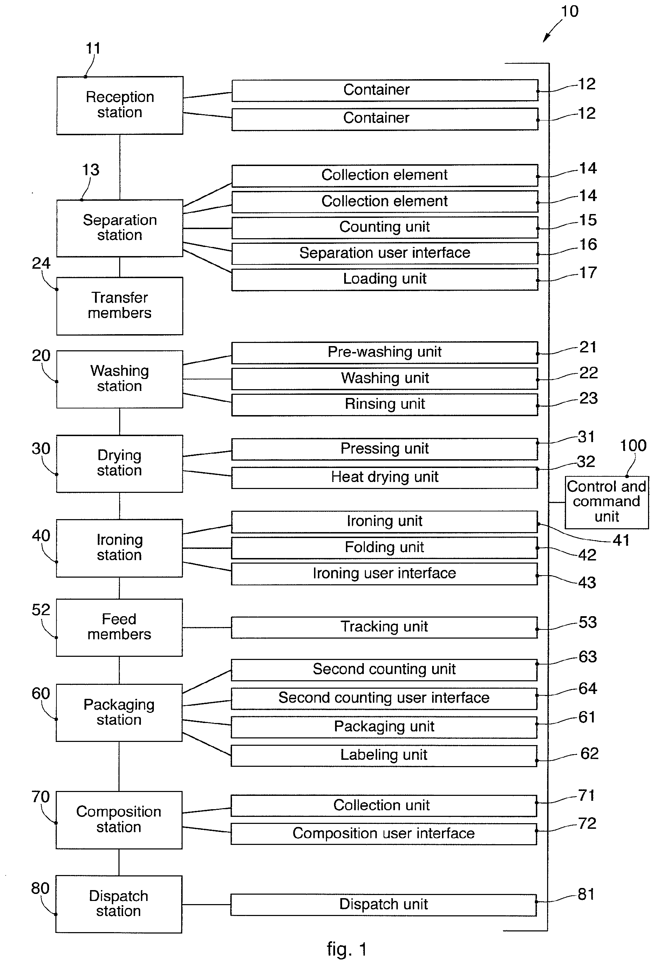

The present invention concerns a method for treating textile articles and can be used in a treatment plant 10 schematized in fig. 1.

In accordance with one aspect of the present invention, the treatment plant 10 comprises a control and command unit 100 configured to control and manage the functioning of the working stations in the treatment plant 10.

The control and command unit 100 can be configured to coordinate the different operating stations, and the different operating steps performed therein, scanning the production times, the temporal delivery programming priorities and the feeding of the textile articles into the treatment plant 10.

The control and command unit 100 can be provided with one or more user interfaces into which data are introduced, at least relating to a temporal delivery program of the textile articles to be treated.

The temporal delivery program of the textile articles can be formulated, for example, as a function of a program to pick up and deliver from/to one or more clients, to pick up the soiled textile articles and deliver the cleaned ones.

The pick-up and delivery program can be evaluated as a function of contracts drawn up with the client, the quantity of textile articles to be picked up and the optimal itineraries for picking up and delivering the textile articles from/to the client, in order to contain transport costs.

According to the present invention, the control and command unit 100 is also configured to process a temporal program of delivery orders of the articles to the clients with the identification of a priority order for treating the clients' textile articles.

The delivery orders can contain, for example, information concerning the number of textile articles, for each type, to be sent to each client.

The treatment plant 10, in accordance with the embodiment shown in fig. 1, comprises a reception station 11 in which the textile articles of various types, and arriving from one or more clients, are received.

The control and command unit 100 is connected to the reception station 11 in order to monitor the reception of the textile articles that are conferred in the treatment plant 10 after pick-up from various clients.

The reception station 11 can include a plurality of containers 12, for example trolleys, baskets, bags to contain textile articles arriving from a particular client and previously picked up.

Each container 12, or a predefined group of several containers 12, is assigned to contain textile articles belonging to a specific client. In this way there can be, for example, a first container, or a first group of containers 12, in which are collected all the textile articles received/picked up from a first client, subsequently identified as "X", and a second container, or a second group of containers 12, in which are collected all the textile articles received/picked up from a second client, subsequently identified as "Y".

Downstream of the reception station 11, the treatment plant 10 comprises a separation station 13 configured to allow to separate the textile articles into types of products.

The separation station 13 can comprise a plurality of collection elements 14 each configured to receive one type of product.

The collection elements 14 can comprise at least one of either collection bags, baskets, trolleys, containers or similar. Merely by way of example, the collection elements 14 can contain a variable quantity of textile articles between 25kg and 85kg.

The separation station 13 can also comprise a counting unit 15 configured to count, on each occasion, the textile articles that are introduced into the collection elements 14. In particular, the counting unit 15 is configured to count, for each client X, Y, how many textile articles of one type rather than another have been delivered to the treatment plant 10.

In accordance with one solution, the counting unit 15 can include one or more detection devices, such as an infrared ray sensor or photocell, associated with each collection element 14 and connected to a counter which increases each time the number of textile articles introduced.

According to one embodiment, the separation station 13 can include a separation user interface 16 configured to supply the operators present in the separation station 13 with indications concerning which containers 12 must be conferred to the separation station 13 on the basis of the temporal order delivery program.

In accordance with one solution, the separation station 13 can comprise a loading unit 17 into which the textile articles of each client are loaded each time or their subsequent separation.

The loading unit 17 can comprise at least one of either a loading hopper or a conveyor, for example a belt, on which the textile articles are deposited and the operators can separate them.

Downstream of the separation station 13, the treatment plant 10 comprises a washing station 20 configured to wash the textile articles.

Merely by way of example, the washing of the textile articles can comprise at least a prewash in cold and/or hot water, washing in hot or cold water, introducing detergent solutions, rinsing with hot or cold water, extracting the water, or a possible combination of the above.

Between the separation station 13 and the washing station 20 transfer members 24 are interposed, configured to transfer the textile articles divided according to type from the separation station 13 to the washing station 20.

In accordance with a possible solution, the transfer members 24 can be configured to remove one or the other of the collection elements 14 present in the separation station 13 and to load the textile articles into the washing station 20.

According to possible solutions of the present invention, the transfer members 24 can comprise at least one of either conveyor belts, flight conveyors or suchlike.

The washing station 20 can comprise at least a pre-washing unit 21, a washing unit 22 and a rinsing unit 23.

According to possible solutions, more than one of said pre-washing units 21, washing units 22 and rinsing units 23 can be provided, disposed in sequence one after the other, or according to prefixed layouts to subject the loaded textile articles to prefixed washing cycles.

The washing station 20 is connected to the control and command unit 100 and is configured to command the functioning of its operating units, as a function of the type of textile articles received.

In particular, the washing can be personalized for each homogeneous type of textile articles, for example depending on the textile material, the type of textile article, the provenance of the textile article.

Downstream of the washing station 20 a drying station 30 is provided, configured to remove the water from the textile articles previously washed.

The drying station 30 is connected to the control and command unit 100, which conditions the functioning of the drying station 30, for example depending on the type of textile articles that are received.

In accordance with a possible solution, the drying station 30 can comprise a pressing unit 31 configured to press the textile articles exiting from the washing station 20 and extract at least part of the liquid absorbed by the textile articles.

According to a possible solution, the drying station 30 is provided with at least one drying unit 32 configured to heat the articles and make the water contained therein evaporate.

The drying unit 32 can comprise a heating chamber and extraction towers to extract the humidity, connected to the heating chamber.

The drying unit 32 can be connected to the control and command unit 100 which, depending on the type of textile articles, can command parameters suitable for drying that particular textile article, for example the heating temperature and the times. For example, particular types of textile articles require a complete drying, such as towels, bathrobes, or other articles made of toweling fabric, while other types of articles require only a partial drying in order to facilitate the subsequent ironing.

Downstream of the drying station 30, the treatment plant 10 comprises an ironing station 40 configured to iron and fold the textile articles.

The ironing station 40 is connected to the control and command unit 100, which commands the functioning of the ironing station 40, for example depending on the type of textile articles arriving from the drying station 30.

According to a possible solution, the ironing station 40 is provided with a plurality of ironing units 41 each of which is configured to iron a predefined type of textile article.

In one solution, the textile articles are loaded manually into the ironing units 41 by operators. In a variant the loading of the articles can be automated.

According to a possible solution, the ironing station 40 is also provided with a plurality of folding units 42 configured to fold at least one type of textile article.

The ironing station 40 can comprise an ironing user interface 43, connected to the control and command unit 100 and configured to supply the operators present in the ironing station 40 with information concerning the textile articles to be ironed, on the basis of the priority order present in the temporal delivery program.

In this way the ironing station 40 can be provided with the display for the operators of information concerning the textile articles to be ironed.

Downstream of the ironing station 40 a feed member 52 is provided in which all the textile articles arriving from the different ironing units 41 are sent toward a station downstream.

The at least one feed member 52 can cooperate with one or more tracking units 53 to track the passage of groups of articles, recognizing for example, the type and their eventual destination. The tracking unit 53 can comprise movement sensors, photocells, encoders, infrared rays.

According to another solution, the feed member 52 and the tracking unit 53 can cooperate with a second counting user interface 64. The second counting user interface 64 is configured to supply information to an operator concerning the groups of articles that are moving along the feed member 52, such as their type and their destination established on the basis of said delivery order.

The treatment plant 10 comprises a second counting unit 63 configured to divide the articles into groups of articles to be sent to each of the clients.

The second counting unit 63 is connected to the control and command unit 100, which, depending on the delivery orders previously established, commands the division of the textile articles into groups of articles.

According to a variant, not shown, the second counting unit 63 cooperates, for example, with each ironing unit to carry out the second counting of the textile articles exiting from the ironing station 40 and divides them into groups of articles, for examples into piles of a predefined number of articles, before being packaged.

The treatment plant 10 comprises a packaging station 60 for each group of articles.

According to one solution, the second counting unit 63 and the second counting user interface 64 are disposed in the packaging station 60.

The packaging station 60 is connected to the control and command unit 100, which conditions the functioning of the packaging station 60, for example to identify each group of articles to be attributed to each client.

According to one solution, the packaging station 60 can comprise a packaging unit 61, configured to package, for example with a plastic wrapper, each group of articles into packages.

According to another solution, the packaging station 60 can comprise a labeling unit 62, configured to associate a label with each package, containing for example an identification of the client and/or the group of articles.

Downstream of the packaging station 60, the treatment plant 10 comprises a composition station 70 for the preparation of the delivery orders to the clients.

The composition station 70 comprises a plurality of collection units 71 configured to each receive the groups of articles of a particular delivery order. The collection units 71 can comprise containing trolleys, baskets or sacks.

The composition station 70 comprises a composition user interface 72 configured to supply the operators with information relating to the association of the collection units 71 to each delivery order.

Downstream of the composition station 70, the treatment plant 10 comprises the dispatch station 80 to deliver the textile articles on the basis of the delivery order. The delivery order is issued by a dispatch unit 81 comprised in the dispatch station 80.

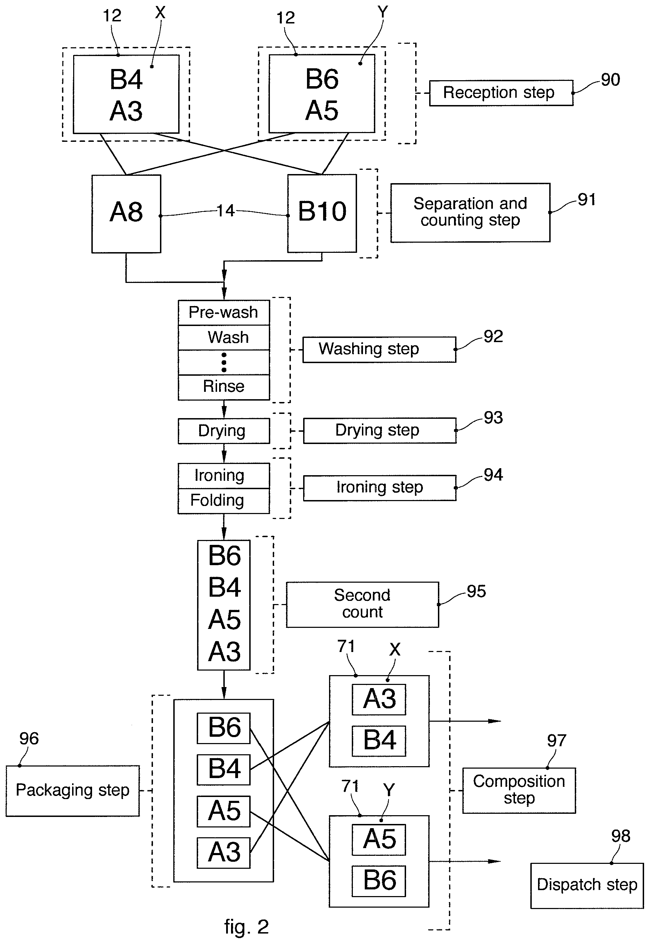

With reference to fig. 2, we will now describe the method for treating textile articles according to the present invention.

The method according to the invention can be implemented in said control and command unit 100 that coordinates the operating stations and the user interfaces installed in the operating stations.

The method comprises a reception step 90 of the textile articles, in a reception station 11, from a plurality of clients, in the case shown here clients X and Y.

The soiled textile articles reach the treatment plant 10 and are collected at the reception station 11 in the containers 12 or groups of containers 12, awaiting the next step.

In this step the textile articles can be contained mixed according to type inside containers and are divided according to which client they come from. In the case shown in fig. 2, a first container 12 associated with client X comprises three textile articles of type A and four textile articles of type B mixed with each other, while a second container 12 associated with client Y comprises five textile articles of type A and six textile articles of type B mixed with each other.

A step is then started to process a temporal program of delivery orders of the textile articles to clients X and Y with the identification of a priority order of treatment of the textile articles. The step of processing the temporal program of delivery orders can be performed by the control and command unit 100.

The priority order is transmitted to the separation user interface 16 and can be displayed by an operator. On the basis of this, the operator can remove the textile articles of client X or Y from the reception station 11 and send them to the separation station 13, for example with the loading unit 17.

A subsequent separation step 91 into types is therefore provided, in this case type A and type B, of the textile articles of clients X and Y, which can be carried out in the separation station 13.

In this step an operator, on each occasion for each client, separates the textile articles A and B according to homogeneous types, introducing the article into one or other of the collection elements 14.

With the introduction of the textile article into the collection elements 14 the counting unit 15 detects the introduction and counts the textile article for each client X or Y.

When the counting of the textile articles received from one of the clients is finished, the counting unit 15 transmits to the control and command unit 100 the data corresponding to the number of textile articles A and B received for each client X or Y.

The control and command unit 100 can thus process, for the specific client X or Y, a summary document or preliminary note containing the number of textile articles received for each type. This summary document or preliminary note, unless there are specific requests/requirements of the client, supplies information about which and how many textile articles have to subsequently be delivered to the client. In the case shown in fig. 2, a first preliminary note is issued for client X with three textile articles of type A and four textile articles of type B, and a second preliminary note for client Y with five textile articles of type A and six textile articles of type B.

In the solution shown in fig. 2, at the end of the separation step eight textile articles of type A are collected in a first collection element 14 and ten textile articles of type B are collected in a second collection element 14, no longer identifiable according to which client they came from.

In accordance with a possible solution, at the same time as the summary document or preliminary note is made, the control and command unit 100 sends a signal to the second counting user interface 64 for the subsequent preparation of the respective delivery order for each client X, Y.

Moreover, the control and command unit 100 cooperates with the composition user interface 72 which communicates with an operator to print the identification label of client X or Y and the route to follow for the delivery of the cleaned textile article to be associated with one of the collection units 71.

Once the limit of the textile articles A and B contained therein has been reached, the transfer members 24 transfer each collection element 14 to the washing station 20 to start the washing step 92.

Each unit 21, 22, 23 is coordinated by the control and command unit 100 to perform the correct treatment on each type A and B of textile articles. Merely by way of example, in fig. 2 during the washing step a pre-washing step, a washing step and a rinsing step can be provided. After the washing step 92 types A and B of textile articles continue toward the drying station 30 for a drying step 93.

The control and command unit 100 determines suitable drying parameters for type A and B of textile articles.

At exit from the drying station 30 the textile articles, divided according to type A and B, are collected in collection baskets.

After the drying step 93 an ironing step 94 is provided, which can comprise both ironing and folding, or only one of these operations on the textile articles.

During the ironing step 94, carried out for example in the ironing station 40, the ironing user interface 43 supplies the operators with information concerning the number and type of textile articles to be ironed according to the temporal delivery program. As a function of this, the operator removes the articles from a particular collection basket, divided according to type A and B, and introduces them into the ironing unit 41 and possibly into the folding unit 42. The passage from the ironing unit 41 to the folding unit 42 can occur automatically.

Subsequently the group of articles leaves the ironing station 40 and is introduced into the feed member 52.

In the feed member 52 all the groups of homogeneous articles are trackd by the tracking unit 53, that is, the feed member 52 recognizes in real time the position of a particular group of articles A and B.

The tracking unit 53 gives an identification code to each textile article or group of articles exiting from the ironing station 40, as well as the number of articles contained in each group of articles.

According to one aspect of the invention, the groups of articles A and B advance along the feed member 52 to reach a subsequent packaging step 96.

After the ironing step 94, the treatment method comprises a second count 95 of the textile articles during which the division into groups of articles is provided, in this case into groups of articles A3, A5, B4, B6, to be subsequently sent to each of the clients X and Y.

The second count 95 can be carried out in the second counting unit 63 described above.

In particular the number of articles of each group of articles A3, A5, B4, B6 is determined as a function of the number of articles counted during the first count and summarized in each preliminary note.

During the second count 95 the second counting user interface 64 automatically matches each textile article or group of articles to the corresponding preliminary note, until the overall number on the preliminary note is reached.

During the packaging step 96, carried out for example in the packaging station 60, each group of articles A3, A5, B4, B6 is packaged by the packaging unit 61, for example automatically.

The labeling unit 62, depending on the previous matching of the corresponding preliminary note, identifies the groups of articles A3, A5, B4, B6 and applies a label to each package with the client identification, and possibly the date, description of the article, delivery itinerary. This information is processed and sent by the control and command unit 100.

Once the groups of articles A3, A5, B4, B6 have been packaged, they can pass to a subsequent composition step 97, for example in said composition station 70. The composition step 97 can be carried out either manually or automatically.

During the composition step 97, a collection unit 71 is associated for each client X or Y, into which the packages with the textile articles of the specific client X or Y are returned.

In the solution of fig. 2, the groups of articles A3 and B4 are associated with the collection unit associated with client X, while the groups of articles A5 and B6 are associated with the collection unit associated with client Y.

Once the composition of the packages has been completed, the preliminary note is considered done and the control and command unit 100 generates a delivery document or note that collects the data of the delivery order. The delivery document or note can be used as identification of the order that is sent to each client, or as an internal administration document for the company.

The issuing of the delivery order starts a final delivery step 98 of cleaned textile articles to each client X, Y.

Advantageously, this eliminates the need for a storage warehouse and management and personnel costs are consequently reduced.

Moreover, the double work in the warehouse for storing and picking up the textile articles from the warehouse is eliminated, and the handling of the cleaned textile articles is also reduced.

The operative steps carried out on the textile articles are suitably managed and coordinated by the control and command unit 100, which scans the performance times and speeds of each step in order to optimize the treatment of the soiled textile articles arriving from the various clients, and to return the articles to the respective clients, as a function of the delivery program.

It is clear that modifications and/or additions of parts may be made to the method for treating textile articles as described heretofore and the corresponding treatment plant, without departing from the field and scope of the present invention.

It is also clear that, although the present invention has been described with reference to some specific examples, a person of skill in the art shall certainly be able to achieve many other equivalent forms of method for treating textile articles and corresponding treatment plant, having the characteristics as set forth in the claims and hence all coming within the field of protection defined thereby.

## Claims

1. Method for treating textile articles comprising:
- a reception step (90) for receiving textile articles from a plurality of clients (X, Y);
- a step of processing a temporal program of delivery orders of said textile articles to said clients (X, Y) with identification of a priority treatment order of said textile articles of said clients;
- a step of separating (91) said textile articles of said clients (X, Y) into types (A, B) as a function of said priority treatment order, said separation step (91) providing to insert the textile articles, divided by type (A, B), into respective collection elements (14), common for several clients, and a first count for each type (A, B) of the textile articles arriving from each of said clients (X, Y), **characterized in that** it comprises:
- a washing step (92), a drying step (93) and an ironing step (94) of the textile articles contained in said collection elements (14), with treatment parameters determined as a function of the type (A, B) of textile articles present in said collection elements (14);
- a second count (95) for each type (A, B) of the textile articles, to divide them into groups of articles (A3, A5, B4, B6) to be sent to each of said clients (X, Y), the number of articles of each group of articles (A3, A5, B4, B6) being determined as a function of the number of articles counted during said first count;
- a packaging step (96) for each group of articles (A3, A5, B4, B6) into packages bearing an indication of the destination to one of said clients (X, Y);
- a composition step (97) for making up a delivery order for each client (X, Y) during which the packages are allocated to the specific delivery order as a function of said destination indication;
**and in that** a control and command unit (100) coordinates the reception step (90), the step of processing a temporal program of delivery orders, the separation step (91), the washing step (92), the drying step (93), the ironing step (94), the second count (95), the packaging step (96), and the composition step (97), as a function of said temporal program of delivery orders.

2. Method for treating textile articles as in claim 1, **characterized in that** the second count (95) is carried out during the packaging step (96).

3. Method for treating textile articles as in claim 1 or 2, **characterized in that** after said first count for each type (A, B), it provides to issue a summary document containing the number of textile articles received from each client (X, Y) according to each type (A, B).

4. Method for treating textile articles as in claim 3, **characterized in that** said separation step (91) comprises the transmission of said summary document to a composition station (70) in which said composition step (97) takes place, **and in that** said composition step (97) comprises associating at least one collection unit (71) to one delivery order of one of said clients (X, Y).

5. Method for treating textile articles as in claim 4, **characterized in that** said composition step (97) provides to associate with each collection unit (71) the packages belonging to a determinate delivery order.

6. Method for treating textile articles as in any claim hereinbefore, **characterized in that** said second count (95) provides to transmit information to a command and control unit (100) which processes said information and transmits updates on the quantity of textile articles sent to the packaging step (96).

7. Method for treating textile articles as in any claim hereinbefore, **characterized in that** after said separation step (91) it provides to send said collection elements (14) to a washing station (20) according to a pre-fixed order as a function of said temporal program of delivery orders, to wash said textile articles, keeping them separated according to type (A, B).

8. Method for treating textile articles as in any claim hereinbefore, **characterized in that** in said ironing step (94), it provides to display, for operators, information relating to the textile articles to be ironed, said information being presented on the basis of said priority order.

9. Method for treating textile articles as in any claim hereinbefore, **characterized in that** said packaging step (96) provides to associate with each package a label containing at least an identification of the destination client.

10. Treatment plant for textile articles comprising:
- a command and control unit (100) configured to process a temporal program of delivery orders of the textile articles to clients (X, Y) with an identification of a priority order for treating the textile articles of said clients (X, Y);
- a reception station (11) for receiving textile articles from said clients (X, Y);
- a separation station (13) configured to separate into types (A, B) said textile articles of said clients (X, Y) as a function of said priority treatment order, said separation station (13) comprising collection elements (14), common for several clients, into which said textile articles are inserted, divided by type (A, B), and a counting unit (15) configured to carry out a first count, for each type (A, B), of the textile articles arriving from each of said clients (X, Y);
- a washing station (20), a drying station (30) and an ironing station (40) for the textile articles contained in said collection elements (14);
- a second counting unit (63) of the textile articles configured to divide said textile articles into groups of articles (A3, A5, B4, B6) to be sent to each of said clients (X, Y), the number of articles of each group of articles (A3, A5, B4, B6) being determined as a function of the number of articles counted in said first count;
- a packaging station (60) for each group of articles (A3, A5, B4, B6) to package them in packages bearing an indication of the destination to one of said clients (X, Y);
- a composition station (70) to make up a delivery order for each client (X, Y) configured to allocate said packages to the specific delivery order as a function of said destination indication;
said command and control unit (100) being connected to said reception station (11), to said separation station (13), to said washing station (20), to said second counting unit (63), to said packaging station (60), and to said composition station (70) to coordinate their functioning as a function of said temporal program of delivery orders.

## Patentansprüche

1. Verfahren zur Behandlung von Textilwaren, umfassend:
- einen Empfangsschritt (90) zum Empfangen von Textilwaren von einer Vielzahl von Kunden (X, Y);
- einen Schritt der Erarbeitung eines zeitlichen Programms von Lieferaufträgen der Textilwaren an die Kunden (X, Y) mit der Identifizierung einer Behandlungsprioritätsfolge der Textilwaren der Kunden;
- einen Schritt des Sortierens (91) der Textilwaren der Kunden (X, Y) nach Arten (A, B) in Abhängigkeit von der Behandlungsprioritätsfolge, wobei der Sortierschritt (91) die Einfügung der Textilwaren, nach Art (A, B) eingeteilt, in jeweilige, verschiedenen Kunden gemeinsame, Sammelelemente (14) und eine erste Zählung für jede Art (A, B) der Textilwaren, die von jedem der Kunden (X, Y) kommen, vorsieht, **dadurch gekennzeichnet, dass** es umfasst:
- einen Waschschritt (92), einen Trocknungsschritt (93) und einen Bügelschritt (94) der Textilwaren, die in den Sammelelementen (14) enthalten sind, mit Behandlungsparametern, die in Abhängigkeit von der Art (A, B) der Textilwaren, die in den Sammelelementen (14) enthalten sind, bestimmt werden;
- eine zweite Zählung (95) für jede Art (A, B) der Textilwaren, um sie in Gruppen von Waren (A3, A5, B4, B6) einzuteilen, die an jeden der Kunden (X, Y) gesandt werden sollen, wobei die Anzahl der Waren von jeder Gruppe von Waren (A3, A5, B4, B6) in Abhängigkeit von der Anzahl der Waren, die während der ersten Zählung gezählt werden, bestimmt wird;
- einen Verpackungsschritt (96) für jede Gruppe von Waren (A3, A5, B4, B6) in Packungen, die eine Zielangabe an einen der Kunden (X, Y) tragen;
- einen Erstellungsschritt (97) zur Bildung eines Lieferauftrags für jeden Kunden (X, Y), während dessen die Packungen dem spezifischen Lieferauftrag in Abhängigkeit von der Zielangabe zugeteilt werden;
**und dass** eine Überwachungs- und Steuereinheit (100) den Empfangsschritt (90), den Schritt der Erarbeitung eines zeitlichen Programms von Lieferaufträgen, den Sortierschritt (91), den Waschschritt (92), den Trocknungsschritt (93), den Bügelschritt (94), die zweite Zählung (95), den Verpackungsschritt (96) und den Erstellungsschritt (97), in Abhängigkeit von dem zeitlichen Programm von Lieferaufträgen, aufeinander abstimmt.

2. Verfahren zur Behandlung von Textilwaren nach Anspruch 1, **dadurch gekennzeichnet, dass** die zweite Zählung (95) während des Verpackungsschritts (96) durchgeführt wird.

3. Verfahren zur Behandlung von Textilwaren nach Anspruch 1 oder 2, **dadurch gekennzeichnet, dass** es, nach der ersten Zählung für jede Art (A, B), vorsieht, ein zusammenfassendes Dokument auszustellen, das die Anzahl von Textilwaren, die von jedem Kunden (X, Y) erhalten werden, je nach Art (A, B) enthält.

4. Verfahren zur Behandlung von Textilwaren nach Anspruch 3, **dadurch gekennzeichnet, dass** der Sortierschritt (91) die Übermittlung des zusammenfassenden Dokuments an eine Erstellungsstation (70) umfasst, in der der Erstellungsschritt (97) erfolgt, **und dass** der Erstellungsschritt (97) die Zuordnung von zumindest einer Sammeleinheit (71) einem Lieferauftrag vom einem der Kunden (X, Y) umfasst.

5. Verfahren zur Behandlung von Textilwaren nach Anspruch 4, **dadurch gekennzeichnet, dass** der Erstellungsschritt (97) vorsieht, jeder Sammeleinheit (71) die Packungen, die einem bestimmten Lieferauftrag gehören, zuzuordnen.

6. Verfahren zur Behandlung von Textilwaren nach einem der vorangehenden Ansprüche, **dadurch gekennzeichnet, dass** die zweite Zählung (95) vorsieht, Informationen einer Überwachungs- und Steuereinheit (100) zu übermitteln, die diese Informationen verarbeitet und Aktualisierungen über die Menge von Textilwaren, die an den Verpackungsschritt (96) gesandt wurden, übermittelt.

7. Verfahren zur Behandlung von Textilwaren nach einem der vorangehenden Ansprüche, **dadurch gekennzeichnet, dass** es nach dem Sortierschritt (91) vorsieht, die Sammelelemente (14) an eine Waschstation (20) nach einer vorgegebenen Reihenfolge in Abhängigkeit von dem zeitlichen Programm von Lieferaufträgen zu senden, um die Textilwaren zu waschen, indem sie je nach der Art (A, B) sortiert gehalten werden.

8. Verfahren zur Behandlung von Textilwaren nach einem der vorangehenden Ansprüche, **dadurch gekennzeichnet, dass** es in dem Bügelschritt (94) vorsieht, für die Bediener Informationen über die zu bügelnden Textilwaren anzuzeigen, wobei diese Informationen aufgrund der Prioritätsfolge dargeboten werden.

9. Verfahren zur Behandlung von Textilwaren nach einem der vorangehenden Ansprüche, **dadurch gekennzeichnet, dass** der Verpackungsschritt (96) vorsieht, jeder Packung ein Etikett zuzuordnen, das zumindest eine Identifizierung des Bestimmungskunden enthält.

10. Anlage zur Behandlung von Textilwaren umfassend:
- eine Überwachungs- und Steuereinheit (100), die dafür eingerichtet ist, um einen zeitlichen Programm von Lieferaufträgen der Textilwaren an Kunden (X, Y) mit einer Identifizierung einer Prioritätsfolge zur Behandlung der Textilwaren der Kunden (X, Y) zu verarbeiten;
- eine Empfangsstation (11) zum Empfangen von Textilwaren von den Kunden (X, Y);
- eine Sortierstation (13), die dafür eingerichtet ist, um die Textilwaren der Kunden (X, Y) nach Arten (A, B) in Abhängigkeit von der Behandlungsprioritätsfolge zu sortieren, wobei die Sortierstation (13) Sammelelemente (14), die verschiedenen Kunden gemeinsam sind, in die die Textilwaren, nach Art (A, B) eingeteilt, eingefügt werden, und eine Zähleinheit (15), die dafür eingerichtet ist, um eine erste Zählung für jede Art (A, B) der Textilwaren durchführt, die von jedem der Kunden (X, Y) kommen, umfasst;
- eine Waschstation (20), eine Trocknungsstation (30) und eine Bügelstation (40) für die Textilwaren, die in den Sammelelementen (14) enthalten sind;
- eine zweite Zähleinheit (63) der Textilwaren, die dafür eingerichtet ist, um die Textilwaren in Gruppen von Waren (A3, A5, B4, B6) einzuteilen, die an jeden der Kunden (X, Y) gesandt werden sollen, wobei die Anzahl der Waren von jeder Gruppe von Waren (A3, A5, B4, B6) in Abhängigkeit von der Anzahl der Waren, die während der ersten Zählung gezählt werden, bestimmt wird;
- eine Verpackungsstation (60) für jede Gruppe von Waren (A3, A5, B4, B6), um sie in Packungen zu verpacken, die eine Zielangabe an einen der Kunden (X, Y) tragen;
- eine Erstellungsstation (70) zur Bildung eines Lieferauftrags für jeden Kunden (X, Y), die dafür eingerichtet ist, um die Packungen dem spezifischen Lieferauftrag in Abhängigkeit von der Zielangabe zuzuteilen;
wobei die Überwachungs- und Steuereinheit (100) mit der Empfangsstation (11), mit der Sortierstation (13), mit der Waschstation (20), mit der zweiten Zähleinheit (63), mit der Verpackungsstation (60) und mit der Erstellungsstation (70) verbunden ist, um deren Arbeitsweise in Abhängigkeit von dem zeitlichen Programm von Lieferaufträgen aufeinander abzustimmen.

## Revendications

1. Procédé de traitement d'articles textiles comprenant :
- une étape de réception (90) pour recevoir des articles textiles provenant d'une pluralité de clients (X, Y) ;
- une étape d'exécution d'un programme temporel d'ordres de livraison desdits articles textiles auxdits clients (X, Y) avec une identification d'un ordre de priorité de traitement desdits articles textiles desdits clients ;
- une étape de séparation (91) desdits articles textiles desdits clients (X, Y) par types (A, B) en fonction dudit ordre de priorité de traitement, ladite étape de séparation (91) prévoyant d'introduire les articles textiles, répartis par type (A, B), dans des éléments de collecte (14), communs à plusieurs clients, et un premier comptage pour chaque type (A, B) des articles textiles provenant de chacun desdits clients (X, Y), **caractérisé en ce qu'**il comprend :
- une étape de lavage (92), une étape de séchage (93) et une étape de repassage (94) des articles textiles contenus dans lesdits éléments de collecte (14), avec des paramètres de traitement déterminés en fonction du type (A, B) d'articles textiles présents dans lesdits éléments de collecte (14) ;
- un second comptage (95) pour chaque type (A, B) d'articles textiles, pour les répartir en groupes d'articles (A3, A5, B4, B6) à envoyer à chacun desdits clients (X, Y), le nombre d'articles de chaque groupe d'articles (A3, A5, B4, B6) étant déterminé en fonction du nombre d'articles comptés durant ledit premier comptage ;
- une étape d'emballage (96) pour chaque groupe d'articles (A3, A5, B4, B6) dans des emballages portant une indication de la destination de l'un desdits clients (X, Y) ;
- une étape de composition (97) pour exécuter un ordre de livraison pour chaque client (X, Y) durant laquelle les emballages sont attribués à l'ordre de livraison spécifique en fonction de ladite indication de destination ;
**et en ce qu'**une unité de contrôle et de commande (100) coordonne l'étape de réception (90), l'étape d'exécution d'un programme temporel d'ordres de livraison, l'étape de séparation (91), l'étape de lavage (92), l'étape de séchage (93), l'étape de repassage (94), le second comptage (95), l'étape d'emballage (96) et l'étape de composition (97), en fonction dudit programme temporel d'ordres de livraison.

2. Procédé de traitement d'articles textiles selon la revendication 1, **caractérisé en ce que** le second comptage (95) est effectué durant l'étape d'emballage (96).

3. Procédé de traitement d'articles textiles selon la revendication 1 ou 2, **caractérisé en ce qu'**après ledit premier comptage pour chaque type (A, B), il prévoit d'émettre un document récapitulatif contenant le nombre d'articles textiles reçus de chaque client (X, Y) suivant chaque type (A, B).

4. Procédé de traitement d'articles textiles selon la revendication 3, **caractérisé en ce que** l'étape de séparation (91) comprend la transmission dudit document récapitulatif à une station de composition (70) où a lieu ladite étape de composition (97), **et en ce que** ladite étape de composition (97) comprend l'association d'au moins une unité de collecte (71) à un ordre de livraison de l'un desdits clients (X, Y).

5. Procédé de traitement d'articles textiles selon la revendication 4, **caractérisé en ce que** ladite étape de composition (97) prévoit d'associer à chaque unité de collecte (71) les emballages appartenant à un ordre de livraison déterminé.

6. Procédé de traitement d'articles selon l'une quelconque des revendications précédentes, **caractérisé en ce que** ledit second comptage (95) prévoit de transmettre des informations à une unité de commande et de contrôle (100) laquelle traite lesdites informations et transmet des mises à jour de la quantité d'articles textiles envoyés à l'étape d'emballage (96).

7. Procédé de traitement d'articles textiles selon l'une quelconque des revendications précédentes, **caractérisé en ce qu'**après ladite étape de séparation (91), il prévoit d'envoyer lesdits éléments de collecte (14) à une station de lavage (20) suivant un ordre prédéterminé en fonction dudit programme temporel d'ordres de livraison, de laver lesdits articles textiles, en les maintenant séparés par type (A, B).

8. Procédé de traitement d'articles textiles selon l'une quelconque des revendications précédentes, **caractérisé en ce qu'au** cours de ladite étape de repassage (94), il prévoit de d'afficher, pour les opérateurs, des informations relatives aux articles textiles à repasser, lesdites informations étant présentées sur la base dudit ordre de priorité.

9. Procédé de traitement d'articles textiles selon l'une quelconque des revendications précédentes, **caractérisé en ce que** ladite étape d'emballage (96) prévoit d'associer à chaque emballage une étiquette contenant au moins une indentification du client destinataire.

10. Usine de traitement d'articles textiles comprenant :
- une unité de commande et de contrôle (100) configurée pour exécuter un programme temporel d'ordres de livraison des articles textiles à des clients (X, Y) avec une identification d'un ordre de priorité pour traiter les articles textiles desdits clients (X, Y) ;
- une station de réception (11) pour recevoir des articles textiles provenant desdits clients (X, Y) ;
- une station de séparation (13) configurée pour séparer par types (A, B) lesdites articles desdits clients (X, Y) en fonction dudit ordre de priorité de traitement, ladite station de séparation (13) comprenant des éléments de collecte (14), communs à plusieurs clients, dans lesquels lesdits articles textiles sont introduits, répartis par type (A, B), et une unité de comptage (15) configurée pour effectuer une premier comptage, pour chaque type (A, B), d'articles textiles provenant de chacun desdits clients (X, Y) ;
- une station de lavage (20), une station de séchage (30) et une station de repassage (40) pour les articles textiles contenus dans lesdits éléments de collecte (14) ;
- une seconde unité de comptage (63) des articles textiles configurée pour répartir lesdits articles textiles par groupes d'articles (A3, A5, B4, B6) à envoyer à chacun desdits clients (X, Y), le nombre d'articles de chaque groupe d'articles (A3, A5, B4, B6) étant déterminé en fonction du nombre d'articles comptés au cours dudit premier comptage ;
- une station d'emballage (60) pour chaque groupe d'articles (A3, A5, B4, B6) pour les emballer dans des emballages portant une indication de la destination à l'un desdits clients (X, Y) ;
- une station de composition (70) pour exécuter un ordre de livraison pour chaque client (X, Y), configurée pour attribuer lesdits emballages à l'ordre de livraison spécifique en fonction de ladite indication de destination ;
ladite unité de commande et de contrôle (100) étant connectée à ladite station de réception (11), à ladite station de séparation (13), à ladite station de lavage (20), à ladite seconde unité de comptage (63), à ladite station d'emballage (60), et à ladite station de composition (70) pour coordonner leur fonctionnement en fonction dudit programme temporel d'ordres de livraison.
